# EUROPÄISCHE PATENTSCHRIFT

(11) **EP 3 729 566 B1**
(45) Veröffentlichungstag und Bekanntmachung des Hinweises auf die Patenterteilung: **22.02.2023**
(21) Anmeldenummer: 18819445.0
(22) Anmeldetag: 21.11.2018
(51) Int. Cl.: H01R 13/639, H01R 13/627, B60L 53/16, B60L 53/30, B60L 53/18

(54) **VERRIEGELUNGSVORRICHTUNG FÜR EINE ELEKTRISCHE LADEVORRICHTUNG**
LOCKING DEVICE FOR AN ELECTRIC CHARGING DEVICE
DISPOSITIF DE BLOQUAGE POUR UN DISPOSITIF DE CHARGE ÉLECTRIQUE

(30) Priorität: 20.12.2017 DE 102017130658
(43) Veröffentlichungstag der Anmeldung: 28.10.2020
(73) Patentinhaber: Kiekert AG, 42579 Heiligenhaus (DE)
(72) Erfinder: TÖPFER, Claus, 71063 Sindelfingen (DE); SCHLABS, Winfried, 44869 Bochum (DE); DJEDOVIC, Benjamin, 46049 Oberhausen (DE); ÖZDOGAN, Fatih, 42329 Wuppertal (DE)
(86) Internationale Anmeldenummer: PCT/DE2018/100951
(87) Internationale Veröffentlichungsnummer: WO 2019/120371

(56) Entgegenhaltungen:
- DE-A1-102011 050 536
- DE-A1-102011 050 998
- DE-A1-102013 110 428
- DE-A1-102015 224 949
- DE-B3-102012 022 413
- DE-U1-202013 009 554
- JP-A- 2013 187 094
- US-A1- 2012 238 122

## Beschreibung

Die Erfindung betrifft eine Verriegelungsvorrichtung für eine elektrische Ladevorrichtung eines Kraftfahrzeugs, insbesondere eines Elektro- oder Hybridkraftfahrzeuges, mit einem verfahrbaren Riegelelement, das dazu vorgesehen ist, einen Ladestecker in einer Ladesteckdose der elektrischen Ladevorrichtung lösbar zu verriegeln und das zumindest in die Positionen "entriegelt" und "verriegelt" verstellbar ist, und mit einem motorischen Antrieb, der zur Verstellung des Riegelelementes vorgesehen ist, wobei das Riegelelement in eine dritte Position "selbstverriegelt" jenseits der Stellung "verriegelt" verstellbar ist, die mithilfe des Antriebes anfahrbar ist und in welcher eine Entriegelung ohne den Antrieb möglich ist, und wobei in der Stellung "selbstverriegelt" des Riegelelementes eine hieran angreifende Kraft in Entriegelungsrichtung drehmomentfrei in Bezug auf den Antrieb umgelenkt wird.

Akkumulatoren von Elektro- oder Hybridkraftfahrzeugen müssen regelmäßig mit elektrischer Energie versorgt werden. Das geschieht unter Rückgriff auf eine Ladeinfrastruktur, zu welcher typischerweise Ladesäulen gehören. Für den Ladevorgang mit elektrischer Energie wird der Ladestecker im Allgemeinen mit einer kraftfahrzeugseitigen Ladesteckdose gekoppelt und lösbar verriegelt. Die Verriegelung ist erforderlich, um Gesundheitsgefährdungen zu vermeiden, da an dieser Stelle im Allgemeinen mit Hochspannung gearbeitet wird.

Darüber hinaus stellt die Verriegelung sicher, dass beispielsweise ein zuvor identifizierter Benutzer die von der Ladesäule zur Verfügung gestellte elektrische Energie auch rechtmäßig bezieht und Missbrauch verhindert wird. Bei bekannten Lösungen, wie sie in der WO 2010/149426 A1 in diesem Zusammenhang beschrieben werden, erfolgt eine Kommunikation mit Hilfe eines Identifikationssignals, um die Berechtigung des Benutzers nachzuweisen und sicherzustellen, dass der Benutzer die entnommene elektrische Energie auch bezahlt.

Für den Antrieb des Riegelelementes werden im Stand der Technik unterschiedliche Lösungen beschrieben. So ist es durch die DE 10 2014 217 696 A1 bekannt geworden, hierfür eine Druckfeder für das Riegelelement vorzusehen, mit deren Hilfe das Riegelelement vorgespannt ist.

Beim Stand der Technik nach der CN 2020695855 U ist für den Antrieb des Riegelelementes ein elektromotorischer Antrieb vorgesehen. Der elektromotorische Antrieb setzt sich aus einem Elektromotor und einem nachgeschalteten mehrstufigen Getriebe zusammen. Das mehrstufige Getriebe arbeitet über einen Nocken auf das Riegelelement.

Auf diese Weise lassen sich zumindest und ganz grundsätzlich die beiden Positionen "entriegelt" und "verriegelt" des Riegelelementes realisieren und vorgeben. Der Nocken wird seinerseits von einem Getrieberad getragen. Außerdem wird die Stellung des Nockens und damit das Erreichen der unterschiedlichen Positionen durch Sensoren bzw. Schalter abgefragt. Etwaige Manipulationen am Riegelelement lassen sich jedoch im Endeffekt nicht beherrschen, weil beispielsweise in der Stellung "verriegelt" am Verriegelungselement angreifende Kräfte unschwer den Nocken und das Getriebe verstellen können, so dass insgesamt die Position "verriegelt" relativ einfach bei einer Manipulation aufgehoben werden kann.

Der gattungsbildende Stand der Technik nach den Dokumenten JP2013187094A und DE102013110428A1 geht so vor, dass ein verschwenkbares Riegelelement mithilfe des motorischen Antriebes. blockiert und freigegeben werden kann. Dazu ist der motorische Antrieb mit einem Stellelement ausgerüstet, welches mit einem Ende des Riegelelementes wechselwirkt.

Der Erfindung liegt das technische Problem zugrunde, eine derartige Verriegelungsvorrichtung für eine elektrische Ladevorrichtung eines Kraftfahrzeuges und insbesondere eines Elektro- oder Hybridkraftfahrzeuges so weiter zu entwickeln, dass insgesamt die Sicherheit gesteigert ist und im Besonderen die erreichte Position "verriegelt" des Riegelelementes nicht durch äußere Manipulationen aufgehoben werden kann.

Zur Lösung dieser technischen Problemstellung schlägt die Erfindung bei einer gattungsgemäßen Verriegelungsvorrichtung für eine elektrische Ladevorrichtung vor, dass das Riegelelement eine Gabelaufnahme für einen hierin eingreifenden Zapfen des Antriebes aufweist, wobei die Gabelaufnahme mit einer Anlaufschräge für den hieran in der Stellung "selbstverriegelt" anliegenden Zapfen des Antriebes ausgerüstet ist.

Die Erfindung greift also zunächst einmal nicht nur auf die beiden bekannten Positionen "entriegelt" und "verriegelt" des Verriegelungselementes zurück. Sondern das Riegelelement bzw. der motorische Antrieb kann in eine dritte Position "selbstverriegelt" verfahren werden. Diese dritte Position "selbstverriegelt" ist jenseits der Stellung "verriegelt" vorgesehen, d. h. wird dann von dem motorischen Antrieb angefahren, wenn dieser die Position "verriegelt" bereits passiert hat. Es handelt sich um eine sogenannte "Überhubposition".

Dabei drückt die dritte Stellung "selbstverriegelt" im Endeffekt aus, dass es zu einer Verriegelung des Riegelelementes mit Hilfe des motorischen Antriebes kommt. Das heißt, in der dritten Position "selbstverriegelt" sind der motorische Antrieb einerseits und das Riegelelement andererseits so gegeneinander verfahren und liegen so aneinander an, dass eine Beaufschlagung des Riegelelementes in dieser Stellung "selbstverriegelt" nicht dazu führt, dass das Riegelelement und mit ihm der motorische Antrieb in die Position "entriegelt" überführt werden kann. Eine Entriegelung ohne den Antrieb, das heißt ohne eine motorische Verstellung des Antriebes, ist nicht möglich.

Vielmehr führt eine beispielsweise manuelle Beaufschlagung des Riegelelementes in der dritten Position "selbstverriegelt" dazu, dass über das Riegelelement auf den motorischen Antrieb kein Drehmoment übertragen werden kann, folglich eine Beaufschlagung des Riegelelementes in Richtung "entriegeln" nicht möglich ist. Eine solche Selbstverriegelung wird beim gattungsbildenden Stand der Technik aus den zuvor bereits geschilderten Gründen entsprechend der CN 2020695855 U nicht erreicht und kann auch nicht eingestellt werden. Dadurch wird insgesamt die Sicherheit erheblich gesteigert und lassen sich Manipulationen verhindern. Hierin sind die wesentlichen Vorteile zu sehen.

Erfindungsgemäß wird in der Stellung "selbstverriegelt" des Riegelelementes eine hieran angreifende Kraft in Entriegelungsrichtung drehmomentfrei in Bezug auf den Antrieb umgelenkt. Das heißt, sofern das Riegelelement in der Stellung "selbstverriegelt" mit einer manipulierenden Kraft in Richtung Entriegelungsrichtung beaufschlagt wird, arbeitet diese Kraft drehmomentfrei auf den Antrieb, so dass der Antrieb insgesamt nicht beaufschlagt wird und folglich das Riegelelement seine Position "selbstverriegelt" beibehält. Erst wenn der Antrieb zusätzlich bestromt und dadurch verstellt wird, lässt sich die Position "selbstverriegelt"_aufheben

Um dies im Detail zu realisieren und umzusetzen, verfügt das Riegelelement erfindungsgemäß über die Gabelaufnahme für den hierin eingreifenden Zapfen des Antriebes. Der Zapfen ist dabei im Allgemeinen endseitig an ein Getriebe zwischen einem Elektromotor und dem Riegelelement angeschlossen. Durch Eingriff des Zapfens des Antriebes in die Gabelaufnahme am Riegelelement lässt sich das Riegelelement in die zuvor beschriebenen drei Positionen überführen.

Dabei ist weiter vorgesehen, dass eine lichte Weite der Gabelaufnahme und der Durchmesser des Zapfens aneinander angepasst sind. Meistens ist die lichte Weite der Gabelaufnahme geringfügig größer als der Durchmesser des Zapfens ausgelegt. Außerdem verfügt die Gabelaufnahme vorteilhaft noch über eine Anlaufschräge für den hieran in der Stellung "selbstverriegelt" anliegenden Zapfen des Antriebes. Tatsächlich ist die Auslegung so getroffen, dass der Zapfen des Antriebes in der Stellung "selbstverriegelt" gegen die fragliche Anlaufschräge fährt. Wird in dieser Position eine (manuelle) Kraft auf das Riegelelement in Richtung "entriegeln" ausgeübt, so verläuft aufgrund der realisierten Anlaufschräge der angreifende Kraftvektor derart, dass der Antrieb nicht mit einem Drehmoment beaufschlagt wird und folglich das Riegelelement keine Entriegelung erfährt.

Tatsächlich ist der Zapfen im Allgemeinen als Bestandteil eines Kurbeltriebes ausgebildet. Der Kraftvektor bei dem zuvor beschriebenen Manipulationsvorgang in Entriegelungsrichtung verläuft bei Anlage des Zapfens in der Stellung "selbstverriegelt" an der Anlaufschräge dabei in der Richtung, dass er in Richtung auf die Drehachse des Kurbeltriebes gerichtet ist bzw. durch die Drehachse des Kurbeltriebes hindurchgeht. Dadurch kann mit Hilfe dieses Kraftvektors kein Drehmoment auf den Kurbeltrieb und folglich auch nicht auf den Antrieb insgesamt ausgeübt werden. Das Riegelelement behält folglich seine Position "selbstverriegelt" bei derartigen Manipulationsversuchen bei. Eine Entriegelung ohne den Antrieb, das heißt ohne eine motorische Verstellung des Antriebes, ist unmöglich.

Die Gabelaufnahme ist im Allgemeinen kopfseitig des Riegelelementes vorgesehen. Außerdem ist die Gabelaufnahme in Seitenansicht U-förmig ausgebildet. Die Anlaufschräge findet sich meistens öffnungsseitig, d. h. entlang einer Öffnung der U-förmigen Gabelaufnahme.

Wie bereits erläutert, ist der Zapfen als Bestandteil einer Kurbeltriebes ausgebildet. Der Kurbeltrieb stellt seinerseits einen Bestandteil des bereits angesprochenen Getriebes und somit des Antriebes dar. Das heißt, der motorische Antrieb setzt sich im Wesentlichen aus dem Elektromotor und dem nachgeschalteten Getriebe inklusive Kurbeltrieb zusammen. Grundsätzlich kann auch auf ein zwischengeschaltetes Getriebe verzichtet werden.

Der Zapfen ist im Allgemeinen an einem Ende einer Kurbelwange vorgesehen. Die Kurbelwange ist ihrerseits meistens kreissegmentartig ausgebildet. Umfangsseitig dieses Kreissegmentes bzw. der kreissegmentartigen Kurbelwange ist ein Eingriffsbereich vorgesehen. Der Eingriffsbereich wechselwirkt mit einem korrespondierenden Eingriffsbereich eines Zahnrades des Getriebes. Auf diese Weise lässt sich die Kurbelwange hin- und herschwenken, um über den angeschlossenen Zapfen und durch Eingriff in die Gabelaufnahme des Riegelelementes das Riegelelement entsprechend linear hin und her zu verschieben.

Tatsächlich ist der Zapfen an ein Ende der Kurbelwange angeschlossen, und zwar dem Eingriffsbereich gegenüberliegend. Das heißt, der Zapfen findet sich meistens zentrumsnah an der kreissegmentartigen Kurbelwange. Dadurch kann die Kurbelwange mit dem Zapfen eine kreisbogenförmige Bewegung vollführen, welche über die Gabelaufnahme auf das Riegelelement insgesamt übertragen wird.

Im Ergebnis wird eine Verriegelungsvorrichtung für eine elektrische Ladevorrichtung eines Kraftfahrzeuges zur Verfügung gestellt, die neben den hinlänglich bekannten Positionen "entriegelt" und "verriegelt" des Riegelelementes eine weitere Funktionsstellung "selbstverriegelt" kennt. In dieser Funktionsstellung "selbstverriegelt" kommt es im Endeffekt zu einer Blockade des Riegelelementes mit Hilfe des motorischen Antriebes. Die Blockade kann auch bei einer (manuellen) Manipulation am Riegelelement und einer versuchten Entriegelung nicht aufgelöst werden, weil die am Riegelelement angreifende Kraft in Entriegelungsrichtung drehmomentfrei in Bezug auf den motorischen Antrieb umgelenkt wird. Hierin sind die wesentlichen Vorteile zu sehen.

Im Folgenden wird die Erfindung anhand einer lediglich ein Ausführungsbeispiel darstellenden Zeichnung näher erläutert; Es zeigen:
- Fig. 1: eine Anschlussvorrichtung in einer Übersicht,
- Fig. 2: den Gegenstand nach Fig. 1 mit zugehörigem Kraftfahrzeug perspektivisch,
- Fig. 3: den motorischen Antrieb perspektivisch und
- Fig. 4A bis 4C: die erfindungsgemäße Verriegelungsvorrichtung inklusive Riegelelement im Detail in unterschiedlichen Funktionsstellungen, und zwar "entriegelt" (Fig. 4A), "verriegelt" (Fig. 4B) und "selbstverriegelt" (Fig. 4C).

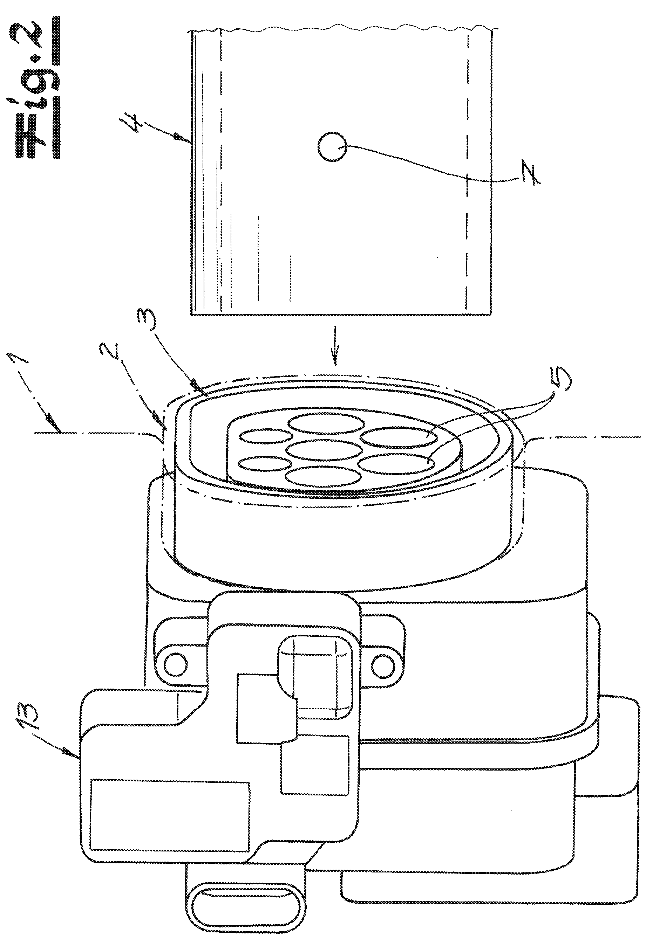

In den Figuren ist zunächst einmal eine elektrische Anschlussvorrichtung für insbesondere Elektro- oder Hybridkraftfahrzeuge dargestellt. Darüber hinaus erkennt man in den Figuren die erfindungsgemäße Verriegelungsvorrichtung für eine elektrische Ladevorrichtung eines solchen Kraftfahrzeuges, das heißt, eines Elektro- oder Hybridkraftfahrzeuges. In der perspektivischen Übersichtsdarstellung nach der Fig. 2 erkennt man von dem fraglichen Elektro- oder Hybridkraftfahrzeug lediglich ansatzweise eine Karosserie 1. Die Karosserie 1 ist mit einer Ausnehmung 2 ausgerüstet.

In der Ausnehmung 2 findet sich eine Ladesteckdose 3 als Bestandteil der elektrischen Ladevorrichtung. Hierzu gehört die erfindungsgemäße Verriegelungsvorrichtung für eine solche elektrische Ladevorrichtung. Die Ladesteckdose 3 kann elektrisch und lösbar verriegelnd mit einem Ladestecker 4 gekoppelt werden, dazu wird der Ladestecker 4 in die Ausnehmung 2 in der Karosserie 1 eingeführt und elektrisch verbindend mit der Ladesteckdose 3 gekoppelt. Der Ladestecker 4 gehört im Allgemeinen nicht zu der karosserieseitig vorgesehenen elektrischen Ladevorrichtung, sondern stellt meistens einen Bestandteil einer Ladesäule oder allgemein der Ladeinfrastruktur dar.

Um den Ladestecker 4 mit der Ladesteckdose 3 elektrisch zu verbinden, verfügt der Ladestecker 4 über in der Fig. 2 nicht ausdrücklich erkennbare Stecckontakte, die in zugehörige Steckbuchsen 5 im Innern der Ladesteckdose 3 eingreifen Selbstverständlich kann auch umgekehrt vorgegangen werden. In diesem Fall ist die Ladesteckdose 3 mit den Steckkontakten ausgerüstet, die in zugehörige Steckbuchsen 5 des Ladesteckers 4 lösbar eingreifen, was jedoch nicht dargestellt ist.

Um den Ladestecker 4 mit der Ladesteckdose 3 lösbar zu verriegeln, ist ein verfahrbares Riegelelement 6 vorgesehen. Bei dem verfahrbaren Riegelelement handelt es sich im Ausführungsbeispiel um einen Verriegelungsstift oder Verriegelungsstößel, folglich ein insgesamt zylindrisches Riegelelement 6, welches als Metallstift oder Kunststoffbauteil ausgebildet ist. Das Riegelelement 6 greift zur lösbaren Verriegelung des Ladesteckers 4 gegenüber der Ladesteckdose 3 in eine zugehörige und in der Fig. 2 erkennbare Ausnehmung 7 im Ladestecker 4 ein, und zwar kopfseitig. Darüber hinaus kann das Riegelelement 6 zusätzlich noch in verriegeltem Zustand in eine weitere Ausnehmung in der Ladesteckdose 3 eingreifen, was im Detail jedoch nicht dargestellt ist.

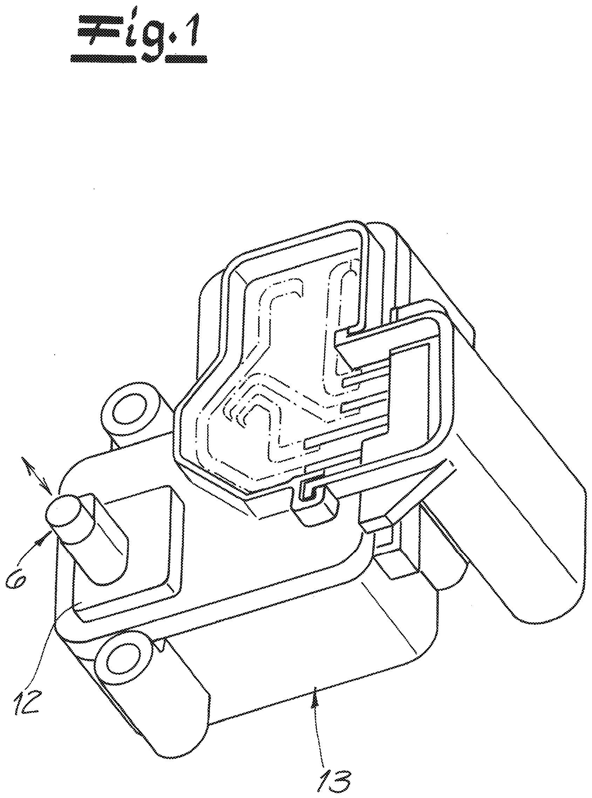

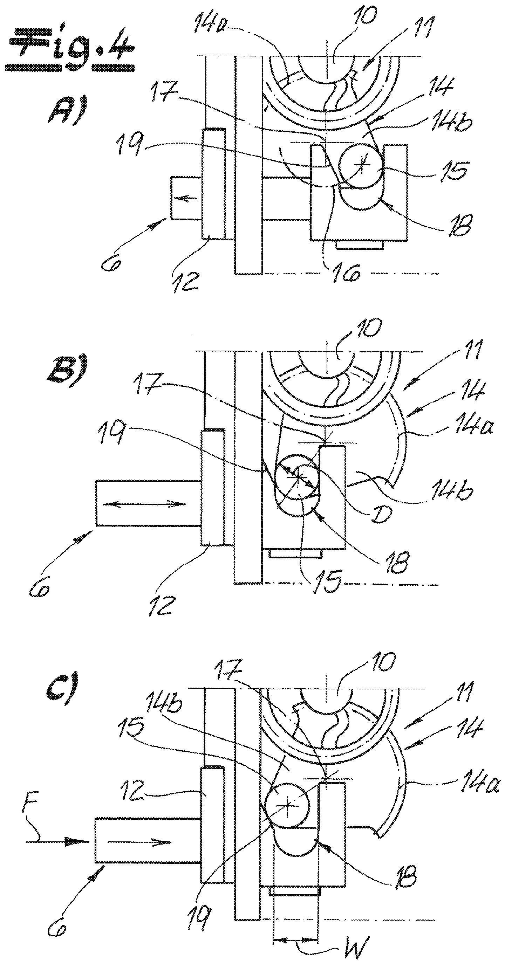

Das Riegelelement 6 lässt sich gegenüber der Ausnehmung 7 im Ladestecker 4 verfahren, um die Verriegelung zwischen dem Ladestecker 4 und der Ladesteckdose 3 herzustellen respektive aufzuheben. Der entriegelte Zustand der Riegelelementes 6 ist dabei in der Fig. 4A dargestellt. Die Fig. 4B zeigt den Zustand "verriegelt" des Riegelelementes 6. Hierzu korrespondieren jeweils Bewegungen des Riegelelementes 6 in seiner Längsrichtung, wie dies ein Doppelpfeil in der Fig. 1 andeutet. Für die Stellbewegungen des Riegelelementes 6 sorgt nach dem Ausführungsbeispiel ein elektromotorischer Antrieb 8, 9, 10, 11; 14, 15.

Der elektromotorische Antrieb 8 bis 11; 14, 15 wird in einem eigenen Antriebsgehäuse 13 aufgenommen und von dem Antriebsgehäuse 13 insgesamt eingehaust, wie die Fig. 1 deutlich macht. Auf diese Weise kann der Antrieb 8 bis 11; 14, 15 modular und unabhängig von der Ladesteckdose 3 im Innern der Karosserie 1 an geeigneter Stelle platziert und eingebaut werden. Eine am Antriebsgehäuse 13 außenseitig vorgesehene Dichtung 12 sorgt in diesem Zusammenhang dafür, dass das Riegelelement 6 abgedichtet gegenüber dem Antriebsgehäuse 13 hin- und herbewegt werden kann. Dazu ist die Dichtung 12 im Bereich des Riegelelementes 6 und dieses umringend vorgesehen. Da darüber hinaus das Riegelelement 6 im Antriebsgehäuse 13 gelagert ist, steht insgesamt eine einbaufertige Baugruppe bzw. ein Einbaumodul zur Verfügung, welches entsprechend der Darstellung in der Fig. 2 mit der Ladesteckdose 3 gekoppelt werden kann. Grundsätzlich fallen unter die Erfindung auch Lösungen, bei welchen der Antrieb 8 bis 11; 14, 15 und die Ladesteckdose 3 in einem gemeinsamen Gehäuse aufgenommen werden, was jedoch nicht gezeigt ist.

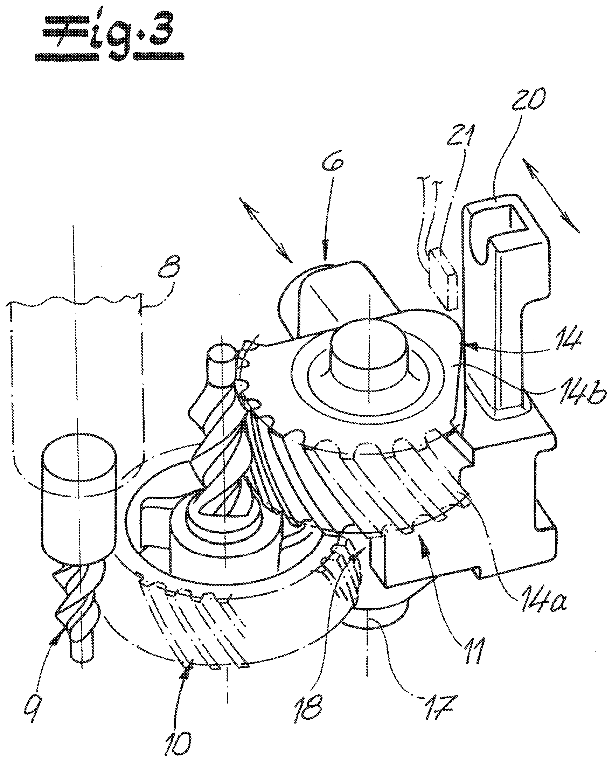

Der Antrieb 8 bis 11; 14, 15 setzt sich im Detail aus einem Elektromotor 8 und einem zugehörigen Getriebe 9 bis 11 zusammen, wie man am besten in der Fig. 3 erkennt. Außerdem ist ein Kurbeltrieb 14, 15 realisiert. Das Getriebe 9 bis 11 ist mit insgesamt drei Getriebestufen 9 bis 11 mit zugehörigen Getriebewellen ausgerüstet. Tatsächlich treibt der Antrieb 8 mit Hilfe seiner ausgangsseitigen Abtriebswelle zunächst einmal eine erste Getriebewelle 9 an, die ihrerseits mit einer weiteren zweiten Getriebewelle 10 kämmt. Die Getriebewelle 9 und die weitere zweite Getriebewelle 10 sind größtenteils in seitlicher Überdeckung zueinander angeordnet. Darüber hinaus ist eine weitere dritte Getriebewelle 11 in seitlicher Überdeckung zur zweiten Getriebewelle 10 und zum Elektromotor 8 innerhalb des Antriebsgehäuses 13 platziert (vgl. Fig. 3).

Man erkennt, dass die einzelnen Getriebestufen bzw. Getriebewellen 9, 10, 11 parallel zueinander angeordnet sind. Außerdem sind die fraglichen Getriebestufen 9, 10, 11 bzw die Getriebewelle 9, 10, 11 und zugehörige Zahnräder insgesamt und nicht einschränkend aus Kunststoff hergestellt. Bei den ineinandergreifenden Verzahnungen handelt es sich um Evoloidverzahnungen und Schrägverzahnungen bzw. Stirnradverzahnungen, was selbstverständlich nur beispielhaft und nicht einschränkend gilt.

Die dritte Getriebestufe bzw. die Getriebewelle 11 ist mit einer insbesondere in den Seitenansichten nach den Fig. 4A bis 4C zu erkennenden Kurbelwange 14 als Bestandteil des Kurbeltriebes 14, 15 ausgerüstet. Die Kurbelwange 14 ist kreissegmentartig ausgebildet und mit einem umfangsseitigen Eingriffsbereich 14a und einem Zapfen 15 ausgerüstet, welcher im oder nahe eines Zentrums 14b angeordnet ist. Der umfangsseitige Eingriffsbereich 14a kämmt mit einer Verlängerung mit umfangsseitiger Verzahnung der zweiten Getriebestufe 10 und kann auf diese Weise eine in der Fig. 4A durch einen Kreisbogen 16 angedeutete Schwenkbewegung des Zapfens 15 definieren.

Das heißt, je nach Ansteuerung des Elektromotors 8 sorgt das Getriebe 9 bis 11 dafür, dass die Kurbelwange 14 und mit ihr der hieran angeordnete Zapfen 15 verschwenkt werden. Tatsächlich wird der Elektromotor 8 hierbei so angesteuert, dass der Zapfen 15 entlang des auf diese Weise definierten Kreisbogens 16 hin- und herbewegt werden kann. Dabei wird die Kurbelwange 14 um ihre Achse 17 wie angedeutet verschwenkt.

Der Zapfen 15 greift insgesamt in eine Gabelaufnahme 18 ein. Die Gabelaufnahme 18 ist U-förmig ausgebildet und findet sich kopfseitig des Riegelelementes 6. Anhand einer vergleichenden Betrachtung der Fig. 4A bis 4C wird deutlich, dass die Gabelaufnahme 18 nicht nur in Seitenansicht U-förmig ausgebildet ist, sondern öffnungsseitig auch über eine Anlaufschräge 19 verfügt. Das heißt, die Anlaufschräge 19 ist im Bereich einer Öffnung der U-förmigen Gabelaufnahme 18 vorgesehen und angeordnet. Dabei ist die Anlaufschräge 19 insgesamt so ausgerichtet, dass sie zu einer Vergrößerung einer lichten Weite W der Gabelaufnahme 18 in Richtung auf die Öffnung der U-förmigen Gabelaufnahme 18 führt. Die lichte Weite W der Gabelaufnahme 18 ist insgesamt an einen Durchmesser D des hierin aufgenommenen Zapfens 15 dergestalt angepasst, dass der fragliche Zapfen 15 insgesamt mit geringem Spiel in der U-förmigen Gabelaufnahme 18 aufgenommen wird.

Die Funktionsweise ist wie folgt. Anhand einer vergleichenden Betrachtung der Fig. 4A bis 4C wird deutlich, dass das Riegelelement 6 nicht nur in die Position "entriegelt" entsprechend der Darstellung in der Fig. 4A und "verriegelt" gemäß der Fig. 4B verfahren werden kann. Sondern erfindungsgemäß ist darüber hinaus eine dritte Position "selbstverriegelt" mit Hilfe des motorischen Antriebes 8 bis 11, 14, 15 anfahrbar, wie sie in der Fig. 4C dargestellt ist. Die Stellung "selbstverriegelt" findet sich dabei jenseits der Stellung "verriegelt" entsprechend der Darstellung in der Fig. 4B.

Tatsächlich wird beim Übergang von der Position "verriegelt" nach der Fig. 4B zur Stellung "selbstverriegelt" gemäß der Fig. 4C der motorische Antrieb 8 bis 11; 14, 15 in eine Art "Überhubposition" verfahren. In dieser Überhubposition bzw. in der Stellung "selbstverriegelt" ist eine Entriegelung ohne den motorischen Antrieb 8 bis 11; 14, 15 unmöglich. Das heißt, der motorische Antrieb 8 bis 11; 14, 15 muss elektrisch beaufschlagt werden, um die Position "selbstverriegelt" aufzuheben. Denn in der Stellung "selbstverriegelt" nach der Fig. 4C kommt es letztlich dazu, dass das Riegelelement 6 mit Hilfe des motorischen Antriebes 8 bis 11; 14, 15 blockiert wird und selbst eine Kraftbeaufschlagung des Riegelelementes 6 durch beispielsweise eine Manipulation nicht dazu führt, dass das Riegelelement 6 in seine Stellung "entriegelt" überführt wird.

Wird beispielsweise das Riegelelement 6 in der Stellung "selbstverriegelt" nach der Fig. 4C mit einer dort angedeuteten Kraft F manuell beaufschlagt, so wird diese Kraft F mit ihrem in Längsrichtung des zylinderförmigen Riegelelementes 6 orientierten Kraftvektor umgelenkt. Das heißt, in der Stellung "selbstverriegelt" des Riegelelementes 6 wird die hieran angreifende Kraft F in Entriegelungsrichtung drehmomentfrei in Bezug auf den Antrieb 8 bis 11; 14, 15 umgelenkt. Hierfür sorgt im Wesentlichen die Anlaufschräge 19.

Tatsächlich erkennt man anhand der Kraftpfeile in der Fig. 4C zur Stellung "selbstverriegelt", dass die fragliche Kraft F bzw. deren Kraftvektor senkrecht zur Anlaufschräge 19 verläuft und folglich die resultierende und umgelenkte Kraft in Richtung auf die Achse 17 der Kurbelwange 14 gerichtet ist. Da folglich die umgelenkte Kraft F an der Achse 17 und nicht beabstandet hiervon angreift, kann auf die Kurbelwange 14 auch kein Drehmoment übertragen werden. Als Folge hiervon führen derartige Manipulationen auch nicht dazu, dass das Riegelelement 6 in die Position "entriegelt" überführt wird. Vielmehr verbleibt das Riegelelement 6 in seiner Stellung gemäß der Fig. 4C "selbstverriegelt".

Erst dann, wenn der motorische Antriebe 8 bis 11; 14, 15 elektrisch beaufschlagt wird und für die Verschwenkung der Kurbelwange 14 in Richtung "entriegeln" sorgt, wird die Blockade des Riegelelementes 6 in der Stellung "selbstverriegelt" aufgehoben. Im Anschluss daran kann dann das Riegelelement 6 in die Position "entriegelt" entsprechend der Darstellung in der Fig. 4A überführt werden.

Wie bereits erläutert, ist der Zapfen 15 an ein Ende der Kurbelwange 14 angeschlossen, die ihrerseits um die Achse 17 verschwenkt werden kann, so dass der Zapfen 15 Bewegungen entlang des Kreisbogens 16 vollführt. Diese Bewegungen des Zapfens 15 entlang des Kreisbogens 16 korrespondieren dazu, dass das Riegelelement 6 entlang des Doppelpfeils in der Fig. 1 hin- und herbewegt werden kann. Als Folge hiervon wird auch ein in der Fig. 3 zu erkennender und an das Riegelelement 6 angeschlossener Ausleger 20 hin- und herbewegt, wie ergänzend ein Doppelpfeil in der Fig. 3 andeutet. Diese Hin- und Herbewegung des Auslegers 20 kann mit Hilfe eines in der Fig. 3 angedeuteten und ortsfesten Sensors 21 abgefragt werden. Dadurch lassen sich mit Hilfe des Sensors 21 die einzelnen Funktionsstellungen "entriegelt" und "verriegelt" sowie gegebenenfalls "selbstverriegelt" sensorisch erfassen.

## Patentansprüche

1. Verriegelungsvorrichtung für eine elektrische Ladevorrichtung eines Kraftfahrzeuges, insbesondere eines Elektro- oder Hybridkraftfahrzeuges, mit einem verfahrbaren Riegelelement (6), das dazu vorgesehen ist, einen Ladestecker (4) in einer Ladesteckdose (3) der elektrischen Ladevorrichtung lösbar zu verriegeln und welches zumindest in die Positionen "entriegelt" und "verriegelt" verstellbar ist, und mit einem motorischen Antrieb (8 bis 11; 14, 15), der zur Verstellung des Riegelelementes (6) vorgesehen ist, wobei
das Riegelelement (6) in eine dritte Position "selbstverriegelt" jenseits der Stellung "verriegelt" verstellbar ist, die mit Hilfe des Antriebes (8 bis 11; 14, 15) anfahrbar ist und in welcher eine Entriegelung ohne den Antrieb (8 bis 11; 14, 15) unmöglich ist, und wobei
in der Stellung "selbstverriegelt" des Riegelelementes (6) eine hieran angreifende Kraft (F) in Entriegelungsrichtung drehmomentfrei in Bezug auf den Antrieb (8 bis 11; 14, 15) umgelenkt wird,
**dadurch gekennzeichnet, dass**
das Riegelelement (6) eine Gabelaufnahme (18) für einen hierin eingreifenden Zapfen (15) des Antriebes (8 bis 11; 14, 15) aufweist, wobei
die Gabelaufnahme (18) mit einer Anlaufschräge (19) für den hieran in der Stellung "selbstverriegelt" anliegenden Zapfen (15) des Antriebes (8 bis 11; 14, 15) ausgerüstet ist.

2. Vorrichtung nach Anspruch 1, **dadurch gekennzeichnet, dass** eine lichte Weite (W) der Gabelaufnahme (18) und der Durchmesser (D) des Zapfens (15) aneinander angepasst sind.

3. Vorrichtung nach Anspruch 1 oder 2, **dadurch gekennzeichnet, dass** die Gabelaufnahme (18) in Seitenansicht U-förmig mit der öffnungsseitigen Anlaufschräge (19) ausgebildet ist.

4. Vorrichtung nach einem der Ansprüche 1 bis 3, **dadurch gekennzeichnet, dass** der Zapfen (15) als Bestandteil eines Kurbeltriebes (14, 15) ausgebildet ist.

5. Vorrichtung nach einem der Ansprüche 1 bis 4, **dadurch gekennzeichnet, dass** der Antrieb (8 bis 11; 14, 15) einen Elektromotor (8), gegebenenfalls ein nachgeschaltetes Getriebe (9 bis 11) und den Kurbeltrieb (14, 15) aufweist.

6. Vorrichtung nach einem der Ansprüche 1 bis 5, **dadurch gekennzeichnet, dass** der Zapfen (15) an einem Ende einer Kurbelwange (14), einem Eingriffsbereich (14a) gegenüberliegend, angeschlossen ist.

7. Vorrichtung nach Anspruch 6, **dadurch gekennzeichnet, dass** die Kurbelwange (14) kreissegmentartig mit dem umfangsseitigen Eingriffsbereich (14a) und dem zentrumsnahen Zapfen (15) ausgebildet ist.

## Claims

1. Locking device for an electric charging device of a motor vehicle, in particular an electric or hybrid motor vehicle, having a movable locking element (6) which is provided to releasably lock a charging plug (4) in a charging socket (3) of the electric charging device and which can be adjusted at least into the "unlocked" and "locked" positions, and having a motor drive (8 to 11; 14, 15) which is provided for adjusting the locking element (6),
it being possible to adjust the locking element (6) into a third "self-locked" position which is beyond the "locked" position, which can be approached with the aid of the drive (8 to 11; 14, 15), and in which an unlocking without the drive (8 to 11; 14, 15) is impossible, and,
in the "self-locked" position of the locking element (6), a force (F) acting thereupon being deflected in the unlocking direction without torque in relation to the drive (8 to 11; 14, 15),
**characterized in that**
the locking element (6) has a fork mount (18) for a pin (15) of the drive (8 to 11; 14, 15), which pin engages in said mount,
the fork mount (18) being equipped with a chamfer (19) for the pin (15) of the drive (8 to 11; 14, 15), which pin rests on said chamfer in the "self-locked" position.

2. Device according to claim 1, **characterized in that** an inside width (W) of the fork mount (18) and the diameter (D) of the pin (15) are matched to one another.

3. Device according to either claim 1 or claim 2, **characterized in that** the fork mount (18), when viewed side-on, is U-shaped with the opening-side chamfer (19).

4. Device according to any of claims 1 to 3, **characterized in that** the pin (15) is designed as part of a crank mechanism (14, 15).

5. Device according to any of claims 1 to 4, **characterized in that** the drive (8 to 11; 14, 15) has an electric motor (8), optionally a downstream gear (9 to 11) and the crank mechanism (14, 15).

6. Device according to any of claims 1 to 5, **characterized in that** the pin (15) is connected to one end of a crank web (14), opposite an engagement region (14a).

7. Device according to claim 6, **characterized in that** the crank web (14) is designed as a segment of a circle with the circumferential engagement region (14a) and the pin (15) near the center.

## Revendications

1. Dispositif de verrouillage pour un dispositif de charge électrique d'un véhicule à moteur, en particulier d'un véhicule à moteur électrique ou hybride, comportant un élément verrou (6) mobile, lequel est conçu pour verrouiller de manière amovible un connecteur enfichable de charge (4) dans une prise de charge (3) du dispositif de charge électrique et lequel peut être réglé au moins dans les positions « déverrouillée » et « verrouillée », et lequel comporte un entraînement (8 à 11 ; 14, 15) à moteur, lequel est conçu pour régler l'élément verrou (6), dans lequel
l'élément de verrou (6) peut être réglé dans une troisième position « auto-verrouillée », au-delà de la position « verrouillée », laquelle peut être approchée à l'aide de l'entraînement (8 à 11 ; 14, 15) et dans laquelle un déverrouillage sans l'entraînement (8 à 11 ; 14, 15) est impossible, et dans lequel
dans la position « auto-verrouillée » de l'élément verrou (6), une force (F) agissant sur celui-ci est déviée dans le sens de déverrouillage sans couple par rapport à l'entraînement (8 à 11 ; 14, 15),
**caractérisé en ce que**
l'élément verrou (6) comporte un logement de fourche (18) pour une cheville (15) de l'entraînement (8 à 11 ; 14, 15) venant en prise dans celui-ci, dans lequel
le logement de fourche (18) est équipé d'un chanfrein de butée (19) pour la cheville (15) de l'entraînement (8 à 11 ; 14, 15) s'appuyant dans celui-ci dans la position « auto-verrouillée ».

2. Dispositif selon la revendication 1, **caractérisé en ce qu'**une largeur (W) intérieure du logement de fourche (18) et le diamètre (D) de la cheville (15) sont adaptés l'un à l'autre.

3. Dispositif selon la revendication 1 ou 2, **caractérisé en ce que** le logement de fourche (18) est conçu, dans une vue latérale, en forme de U avec le chanfrein de butée (19) côté ouverture.

4. Dispositif selon l'une quelconque des revendications 1 à 3, **caractérisé en ce que** la cheville (15) est conçue sous la forme de partie intégrante d'une transmission à manivelle (14, 15).

5. Dispositif selon l'une quelconque des revendications 1 à 4, **caractérisé en ce que** l'entraînement (8 à 11 ; 14, 15) comporte un moteur électrique (8), éventuellement une transmission (9 à 11) montée en aval et la transmission à manivelle (14, 15).

6. Dispositif selon l'une quelconque des revendications 1 à 5, **caractérisé en ce que** la cheville (15) est reliée à une extrémité d'un bras de manivelle (14) de manière à être opposée à une zone de mise en prise (14a).

7. Dispositif selon la revendication 6, **caractérisé en ce que** le bras de manivelle (14) est conçu sous la forme d'un segment circulaire comportant la zone de mise en prise (14a) côté circonférence et la cheville (15) près du centre.
